# EUROPÄISCHE PATENTSCHRIFT

(11) **EP 0 943 473 B1**
(45) Veröffentlichungstag und Bekanntmachung des Hinweises auf die Patenterteilung: **18.08.2004**
(21) Anmeldenummer: 99103170.9
(22) Anmeldetag: 18.02.1999
(51) Int. Cl.: B60J 7/12

(54) **Kraftfahrzeug mit einem verfahrbaren Verdeck**
Vehicle with convertible top
Véhicule avec capote pliante

(30) Priorität: 14.03.1998 DE 19811232
(43) Veröffentlichungstag der Anmeldung: 22.09.1999
(73) Patentinhaber: Siemens Aktiengesellschaft, 80333 München (DE)
(72) Erfinder: Baumert, Jochen, 60489 Frankfurt (DE); Zintler, Albert, 64521 Gross-Gerau (DE)

(56) Entgegenhaltungen:
- EP-A- 0 764 553
- DE-A- 3 527 405
- DE-C- 4 433 601
- US-A- 5 531 472
- PATENT ABSTRACTS OF JAPAN vol. 1999, no. 01, 29. Januar 1999 (1999-01-29) & JP 10 278592 A (MITSUBISHI ELECTRIC CORP), 20. Oktober 1998 (1998-10-20)

## Beschreibung

Die Erfindung betrifft ein Kraftfahrzeug mit einem von einer Verdecksteuerung mittels eines Antriebs verfahrbaren Verdeck, insbesondere Kabriolett und mit einem Sensor zur Ermittlung der Position der Fahrzeuginsassen sowie mit weiteren Merkmalen gemäß dem Oberbegriff des Anspruches 1.

Ein solches Kraftfahrzeug ist in der gattungsgemäßen DE 35 27 405 beschrieben. Es hat, um den Fahrgastraum nach oben hin zu öffnen, ein motorisch verschiebbares Schiebedach, das mit einem Einklemmschutz versehen ist, wodurch verhindert werden soll, dass z. B. ein durch die Schiebedachöffnung gestreckter Arm beim Schließen des Schiebedaches zwischen diesem und dem Schiebedachrahmen eingeklemmt wird.

Zum Öffnen des Fahrgastraumes werden auch zurückklappbare Fahrzeugdächer eingesetzt, wie sie z. B. in der EP 0 764 553 A1 beschrieben sind und die üblicherweise als Verdeck bezeichnet werden.

Kraftfahrzeuge mit einem solchen Verdeck sind seit längerer Zeit allgemein bekannt und in Gebrauch. Sie weisen zum Teil recht komplizierte Bewegungsmechanismen auf, um es dem Fahrer zu ermöglichen, das Verdeck ohne Verlassen des Fahrersitzes ausschließlich durch Betätigung eines Schalters zu öffnen oder zu schließen. Üblicherweise erfolgt die Bewegung des Verdecks durch einen hydraulischen Antrieb. Dabei sind relativ hohe Drücke erforderlich, weil beim Schließen des Verdecks hohe Gegenkräfte eines Verriegelungsmechanismus zu überwinden sind und weil beispielsweise im Winter bei Minustemperaturen das Hydraulikmittel eine große Viskosität hat.

Die erforderlichen hohen Kräfte des Antriebs des Verdecks führen dazu, dass für die Fahrzeuginsassen ein relativ hohes Verletzungsrisiko besteht, wenn sie während des Verfahrens des Verdecks beispielsweise mit den Fingern oder dem Kopf in den Bewegungsbereich des Verdecks gelangen. Die erforderlichen hohen Antriebsmomente des Verdecks erlauben es nicht, den Antrieb des Verdecks wie bei Türen von Fahrstühlen, Fahrzeugen oder Garagentoren erst dann still zu setzen, wenn zum Beispiel ein Finger vom Verdeck eingeklemmt wird, weil schon die normalen Betätigungskräfte zu einer Verletzung führen würden.

Der Erfindung liegt das Problem zugrunde, ein Kraftfahrzeug der eingangs genannten Art so zu gestalten, dass durch das Verfahren seines Verdecks keine Gefährdung für die Fahrzeuginsassen auftreten kann.

Dieses Problem wird erfindungsgemäß dadurch gelöst, dass der Sensor zum Überwachen eines Sicherheitsbereichs zwischen den Fahrzeuginsassen und dem Verdeck ausgebildet ist, wobei der Sicherheitsbereich nach oben hin von einer Hüllkurve, unter die das Verdeck beim Verfahren niemals gelangt, und nach unten hin durch eine Linie, welche nach oben hin den erlaubten Aufenthaltsbereich der Fahrzeuginsassen begrenzt, begrenzt ist.

Bei einem solchen Kraftfahrzeug wird ein Verfahren des Verdecks ausgeschlossen, sofern ein Fahrzeuginsasse den Sicherheitsbereich des Verdecks verletzt und dadurch in den durch die Bewegung des Verdecks entstehenden Gefahrenbereich eingreift. Erfolgt eine solche Verletzung des Sicherheitsbereiches während der Bewegung des Verdecks, kommt es unverzüglich zu einem Stillsetzen des Verdecks. Hierdurch braucht der Fahrer zum Beispiel beim Öffnen des Verdecks während der Betätigung des entsprechenden Schalters nicht die übrigen Fahrzeuginsassen zu überwachen, um erforderlichenfalls durch Stillsetzen der Verdeckbewegung ein Verletzungsrisiko auszuschließen.

Der Sensor könnte so ausgebildet sein, dass er unterhalb des Verdecks eine großflächige Schranke bildet, bei deren Überschreiten, beispielsweise mit der Hand, die Verdecksteuerung anspricht und den Antrieb des Verdecks stillsetzt.

Vorteilhafterweise kann der Sicherheitsbereich durch eine Kamera, einen Infrarotsensor und/oder einen Ultraschallsensor überwacht.

Besonders wirksam sind die Insassen vor Verletzungen durch das Verdeck gesichert, wenn der Sensor zur Aufnahme eines dreidimensionalen Bildes ausgebildet und mit einem Mikroprozessor zur Bildauswertung verbunden ist. Eine solche Bildauswertung ermöglicht es auch, einen Bereich zu überwachen, der von den Fahrzeuginsassen nur vorübergehend nicht benutzt werden darf. Beispielsweise ist es bei manchen Verdecks erforderlich, dass sich die rückwärtigen Fahrzeuginsassen vorübergehend ducken, weil das Verdeck beim Schließen in den Fahrgastraum eindringt.

Dreidimensionale Bilder erzeugende Sensoren sind für andere Anwendungsfälle bekannt und erhältlich.

Der Gefahr einer Verhinderung der Überwachung des gesamten Fahrgastinnenraumes durch die Position einzelner Fahrzeuginsassen kann man dadurch begegnen, dass ein Sensor für die Überwachung der Fahrzeuginsassen der Vordersitze und ein Sensor für die Überwachung der Fahrzeuginsassen der Rücksitze angeordnet ist. Diese beiden Sensoren kann man zum Beispiel oberhalb der Fahrzeuginsassen in Dachhöhe im Kraftfahrzeug anordnen.

Durch den erfindungsgemäßen Sensor kann man zugleich Fehlfunktionen des Verdecks erkennen, wenn gemäß einer anderen Weiterbildung der Erfindung ein Sensor zur gleichzeitigen oder ausschließlichen Überwachung des Bewegungsablaufs des Verdecks angeordnet ist.

Bei manchen Verdecks muss während des Schließens im rückwärtigen Bereich des Kraftfahrzeugs kurzfristig ein relativ großer Abstand von der Kontur des Verdecks eingehalten werden, weil das Verdeck vorübergehend relativ weit in den Fahrgastinnenraum eindringt. Um es den Fahrzeuginsassen unnötig zu machen, sich über längere Zeit zu ducken, ist eine Ausführungsform der Erfindung vorteilhaft, gemäß der die Verdecksteuerung zum Verändern des Sicherheitsbereichs zwischen den Fahrzeuginsassen und dem Verdeck in Abbängigkeit von der Position des Verdecks während seines Verfahrens ausgebildet ist. Eine solche Ausführungsform erlaubt es zum Beispiel den Fahrzeuginsassen beim Öffnen des Verdecks schon durch die entstehende Dachöffnung zu greifen, bevor das Verdeck vollständig geöffnet ist. Auch wird es dadurch möglich, beim Schließen des Verdecks noch durch die Dachöffnung zu greifen, sodas Verdeck noch ausreichend Abstand hat.

Das vollständige Öffnen und Schließen des Verdecks kann auf einfache Weise dadurch überwacht werden, dass ein Sensor zur Überwachung der Winkelstellung eines das Verdeck bewegenden, schwenkbar im Kraftfahrzeug angeordneten Gestänges angeordnet ist. Hierdurch wird es zum Beispiel möglich, die Überwachung des Sicherheitsabstandes einzustellen, sobald das Verdeck vollständig geöffnet ist.

Alternativ dazu kann auch der vom Verdeck zurückgelegte Weg überwacht werden.

Heutige Kraftfahrzeuge werden teilweise mit einem Sensor zur Überwachung der Position der Fahrzeuginsassen zwecks Steuerung der Airbags ausgestattet, wobei einfache Sensorausführungen lediglich die Sitzbelegung und/oder das Schließen der Anschnallgurte überwachen, bessere Sensoren jedoch zusätzlich den Abstand der Personen vom jeweiligen Airbag erfassen. Die Kosten für die Sicherheitseinrichtungen des Kraftfahrzeugs sind besonders niedrig, wenn die Verdecksteuerung gleichzeitig zur Steuerung eines Airbags mit einer Airbagsteuerung verbunden ist.

Die Erfindung lässt zahlreiche Ausführungsformen zu. Zur weiteren Verdeutlichung ihres Grundprinzips ist eine davon schematisch in der Zeichnung dargestellt und wird nachfolgend beschrieben. Diese zeigt in
- Fig.1: eine Seitenansicht eines Kraftfahrzeugs mit den erfindungsgemäßen Sensoren zur Verdecksteuerung,
- Fig.2: eine teilweise Seitenansicht eines Kraftfahrzeugs mit teilweise geöffnetem Verdeck,
- Fig.3: ein Blockschaltbild der Verdecksteuerung.

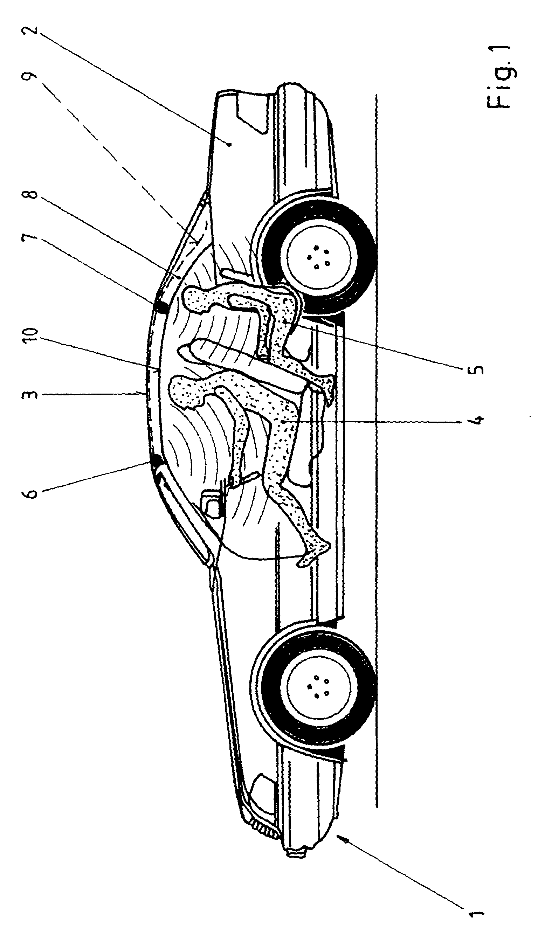

Die Figur 1 zeigt ein Kraftfahrzeug 1 mit einem motorisch in den Kofferraum 2 zu bewegenden Verdeck 3. Ebenfalls dargestellt sind in Figur 1 zwei Fahrzeuginsassen 4, 5. Für die Erfindung wesentlich sind zwei vorzugsweise als Kameras ausgebildete Sensoren 6, 7 oberhalb der Fahrzeuginsassen 4, 5. Diese beiden Sensoren 6, 7 überwachen die Position der Fahrzeuginsassen 4, 5 und verhindern oder unterbrechen eine Bewegung des Verdecks 3, wenn ein Fahrzeuginsasse 4, 5 einen Sicherheitsbereich 8 verletzt. Dieser Sicherheitsbereich 8 wird nach oben hin von einer gestrichelt dargestellten Hüllkurve 9 begrenzt, unter die das Verdeck 3 beim Verfahren niemals gelangt. Unterhalb dieser Hüllkurve 9 wurde eine Linie 10 eingezeichnet, welche nach oben hin den erlaubten Aufenthaltsbereich der Fahrzeuginsassen 4, 5 begrenzt.

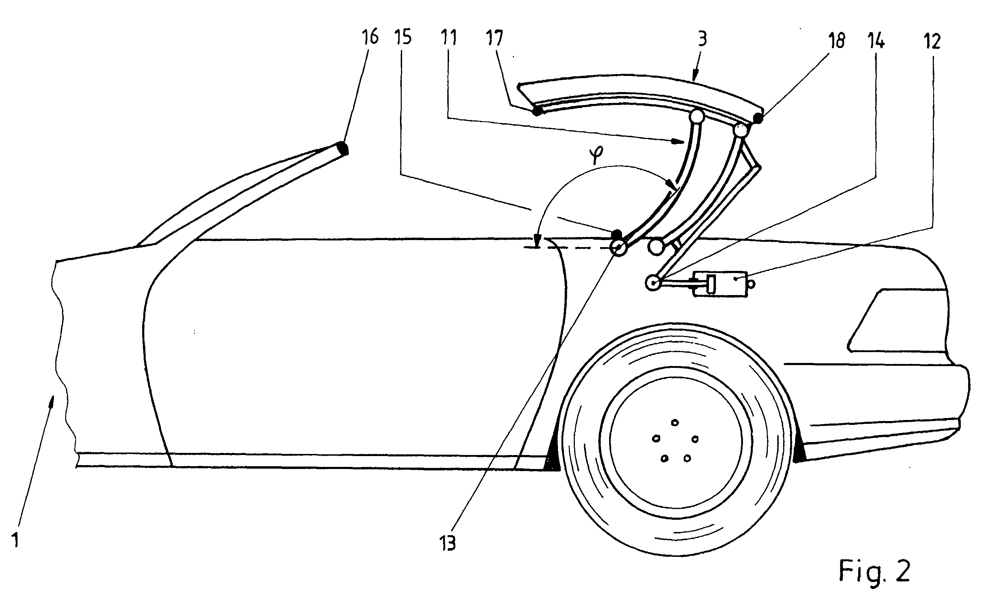

In Figur 2 ist das Verdeck 3 des Kraftfahrzeugs 1 im teilweise geöffneten Zustand dargestellt. Zu sehen ist ein Gestänge 11, welches mittels eines motorischen Antriebs 12 um Drehpunkte 13, 14 verschwenkt werden kann, um das Verdeck 3 zu bewegen. Der Schwenkwinkel ϕ wird dabei von einem Sensor 15 erfasst. Weitere Sensoren 16, 17, 18 am feststehenden Teil des Kraftfahrzeugs und dem Verdeck 3 erlauben es, jeweils festzustellen, ob das Verdeck vollständig geöffnet oder geschlossen ist.

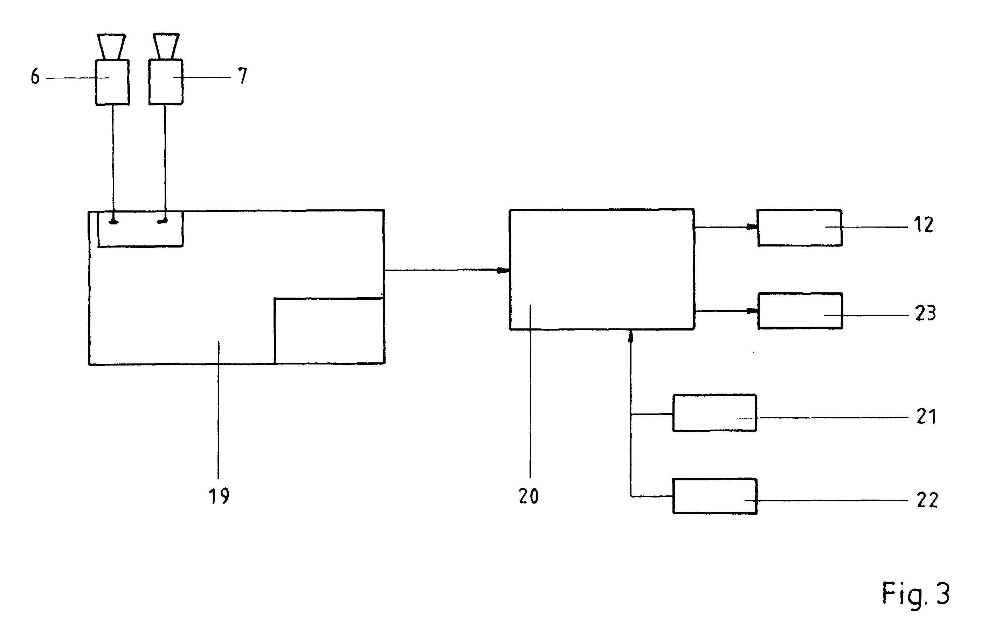

Im Blockschaltbild gemäß Figur 3 ist ein Mikroprozessor 19 dargestellt, der von den beispielsweise als Kamera ausgebildeten Sensoren 6 und 7 Informationen über die Position der Insassen 4, 5 erhält. In diesem Mikroprozessor 19 erfolgt auf übliche Weise eine Analog/Digital-Umwandlung der empfangenen Signale und dann eine Auswertung des dreidimensionalen Bildes. Dadurch wird ein Signal erzeugt und einer Verdecksteuerung 20 zugeführt, welche zusätzlich von einem Sitzbelegungssensor 21 und einem Gurtschlosssensor 22 Informationen erhalten kann. Aufgrund dieser Signale wird von der Verdecksteuerung 20 entweder der Antrieb 12 des Verdecks 3 oder eine Airbagsteuerung 23 angesteuert. Diese Airbagsteuerung 23 sorgt beispielsweise bei einem Crash des Kraftfahrzeugs dafür, dass der Airbag früher als normal aufgeblasen wird, wenn ein Fahrzeuginsasse 4 oder 5 näher vor dem Airbag sitzt als das normalerweise der Fall sein sollte.

## Patentansprüche

1. Kraftfahrzeug mit einem von einer Verdecksteuerung mittels eines Antriebs verfahrbaren Verdeck (3), insbesondere Kabriolett, wobei durch die Bewegung des Verdecks (3) ein Gefahrenbereich entsteht, und mit einem Sensor (6, 7) zur Ermittlung der Position der Fahrzeuginsassen (4, 5), der zum Stillsetzen des Antriebs (12) des Verdecks (3) mit der Verdecksteuerung (20) verbunden ist, **dadurch gekennzeichnet, dass** der Sensor (6, 7) zum Überwachen eines Sicherheitsbereichs (8) zwischen den Fahrzeuginsassen (4, 5) und dem Verdeck (3) ausgebildet ist, wobei der Sicherheitsbereich (8) nach oben hin von einer Hüllkurve (9), unter die das Verdeck (3) beim Verfahren niemals gelangt, und nach unten hin durch eine Linie (10), welche nach oben hin den erlaubten Aufenthaltsbereich der Fahrzeuginsassen (4, 5) begrenzt, begrenzt ist.

2. Kraftfahrzeug nach Anspruch 1, **dadurch gekennzeichnet, dass** der Sensor (6, 7) eine Kamera ist.

3. Kraftfahrzeug nach Anspruch 2, **dadurch gekennzeichnet, dass** der Sensor (6, 7) zur Aufnahme eines dreidimensionalen Bildes ausgebildet und mit einem Mikroprozessor (19) zur Bildauswertung verbunden ist.

4. Kraftfahrzeug nach zumindest einem der vorangehenden Ansprüche, **dadurch gekennzeichnet, dass** ein Sensor (6) für die Überwachung der Fahrzeuginsassen (4) der Vordersitze und ein Sensor (7) für die Überwachung der Fahrzeuginsassen (5) der Rücksitze angeordnet ist.

5. Kraftfahrzeug nach zumindest einem der vorangehenden Ansprüche, **dadurch gekennzeichnet, dass** ein Sensor zur gleichzeitigen oder ausschließlichen Überwachung des Bewegungsablaufs des Verdecks (3) angeordnet ist.

6. Kraftfahrzeug nach zumindest einem der vorangehenden Ansprüche, **dadurch gekennzeichnet, dass** die Verdecksteuerung (20) zum Verändern des Sicherheitsbereichs (8) zwischen den Fahrzeuginsassen (4, 5) und dem Verdeck (3) in Abbängigkeit von der Position des Verdecks (3) während seines Verfahrens ausgebildet ist.

7. Kraftfahrzeug nach zumindest einem der vorangehenden Ansprüche, **dadurch gekennzeichnet, dass** ein Sensor (15) zur Überwachung der Winkelstellung eines das Verdeck (3) bewegenden, schwenkbar im Kraftfahrzeug (1) angeordneten Gestänges (11) angeordnet ist.

8. Kraftfahrzeug nach zumindest einem der vorhergehenden Ansprüche 1 bis 6, **dadurch gekennzeichnet, dass** ein Sensor (15) zur Überwachung des vom Verdeck (3) zurückgelegten Weges vorgesehen ist.

9. Kraftfahrzeug nach zumindest einem der vorangehenden Ansprüche, **dadurch gekennzeichnet, dass** die Verdecksteuerung (20) gleichzeitig zur Steuerung eines Airbags mit einer Airbagsteuerung (23) verbunden ist.

## Claims

1. Motor vehicle having a hood (3) which can be moved by a hood control by means of a drive, in particular convertible, the movement of the hood (3) creating a region of risk, and having a sensor (6, 7) for determining the position of the vehicle occupants (4, 5), which sensor is connected to the hood control (20) to shut down the drive (12) of the hood (3), **characterized in that** the sensor (6, 7) is designed to monitor a safety region (8) between the vehicle occupants (4, 5) and the hood (3), the safety region (8) being upwardly delimited by an envelope curve (9) below which the hood (3) never passes as it moves, and being downwardly delimited by a line (10) which upwardly delimits the region which the vehicle occupants (4, 5) are allowed to occupy.

2. Motor vehicle according to Claim 1, **characterized in that** the sensor (6, 7) is a camera.

3. Motor vehicle according to Claim 2, **characterized in that** the sensor (6, 7) is designed to receive a three-dimensional image and is connected to a microprocessor (19) for evaluation of the image.

4. Motor vehicle according to at least one of the preceding claims, **characterized in that** a sensor (6) is arranged for monitoring the vehicle occupants (4) of the front seats and a sensor (7) is arranged for monitoring the vehicle occupants (5) of the rear seats.

5. Motor vehicle according to at least one of the preceding claims, **characterized in that** a sensor is arranged for simultaneously or exclusively monitoring the movement sequence of the hood (3).

6. Motor vehicle according to at least one of the preceding claims, **characterized in that** the hood control (20) is designed to change the safety region (8) between the vehicle occupants (4, 5) and the hood (3) as a function of the position of the hood (3) while it is moving.

7. Motor vehicle according to at least one of the preceding claims, **characterized in that** a sensor (15) is arranged for monitoring the angular position of a linkage (11) which moves the hood (3) and is arranged pivotably in the motor vehicle (1).

8. Motor vehicle according to at least one of the preceding Claims 1 to 6, **characterized in that** a sensor (15) is provided for monitoring the path covered by the hood (3).

9. Motor vehicle according to at least one of the preceding claims, **characterized in that** the hood control (20) is simultaneously connected to an airbag control (23) for controlling an airbag.

## Revendications

1. Véhicule équipé d'une capote pliable (3) par une commande de capote au moyen d'un entraînement, notamment une décapotable, le mouvement de la capote (3) créant u ne zone de danger, et d'un capteur (6, 7) pour la détection de la position des passagers (4, 5), lequel est relié à la commande de capote (20) pour l'arrêt de l'entraînement (12) de la capote (3), **caractérisé en ce que** le capteur (6, 7 ) e st conçu pour surveiller un périmètre de sécurité (8) entre les passagers (4, 5) et la capote (3), le périmètre de sécurité (8) étant limité vers le haut par une enveloppante (9) sous laquelle la capote (3) ne parvient jamais lors de son pliage, et par le bas par une ligne (10) qui limite vers le haut la zone de séjour permise des passagers (4, 5).

2. Véhicule selon la revendication 1, **caractérisé en ce que** le capteur (6, 7) est une caméra.

3. Véhicule selon la revendication 2, **caractérisé en ce que** le capteur (6, 7) est conçu pour enregistrer une image en trois dimensions et relié à un microprocesseur (19) pour l'évaluation de l'image.

4. Véhicule selon au moins l'une des revendications précédentes, **caractérisé en ce qu'**un capteur (6) pour la surveillance des passagers (4) des sièges avant et un capteur (7) pour la surveillance des passagers (5) des sièges arrière, sont montés.

5. Véhicule selon au moins l'une des revendications précédentes, **caractérisé en ce qu'**un capteur est monté pour la surveillance simultanée ou exclusive de l'enchaînement des mouvements de la capote (3).

6. Véhicule selon au moins l'une des revendications précédentes, **caractérisé en ce que** la commande de capote (20) est conçue pour modifier le périmètre de sécurité (8) entre les passagers (4, 5) et la capote (3) en fonction de la position de la capote (3) pendant son pliage.

7. Véhicule selon au moins l'une des revendications précédentes, **caractérisé en ce qu'**un capteur (15) pour la surveillance de la position angulaire d'une tringlerie (11) déplaçant la capote (3) est disposé de manière pivotable dans le véhicule (1).

8. Véhicule selon au moins l'une des revendications précédentes 1 à 6, **caractérisé en ce qu'**un capteur (15) est prévu pour la surveillance de la course parcourue par la capote (3).

9. Véhicule selon au moins l'une des revendications précédentes, **caractérisé en ce que** la commande de capote (20) est connectée simultanément à une commande de coussin gonflable (23) pour commander un coussin gonflable.
